# EUROPÄISCHE PATENTSCHRIFT

(11) **EP 2 304 193 B1**
(45) Veröffentlichungstag und Bekanntmachung des Hinweises auf die Patenterteilung: **29.07.2015**
(21) Anmeldenummer: 09772337.3
(22) Anmeldetag: 23.06.2009
(51) Int. Cl.: F01D 11/00, F16J 15/08

(54) **DICHTUNG ZUM EINDÄMMEN VON LECKSTRÖMUNGEN ZWISCHEN BENACHBARTEN BAUTEILEN VON STRÖMUNGSMASCHINEN, INSBESONDERE GASTURBINEN**
SEAL FOR CONFINING LEAKAGE FLOWS BETWEEN ADJACENT COMPONENTS OF TURBO-MACHINES, IN PARTICULAR GAS TURBINES
JOINT D'ÉTANCHÉITÉ POUR CONTENIR DES ÉCOULEMENTS DE FUITE ENTRE DES COMPOSANTS VOISINS DE TURBOMACHINES, EN PARTICULIER DE TURBINES À GAZ

(30) Priorität: 01.07.2008 CH 10112008
(43) Veröffentlichungstag der Anmeldung: 06.04.2011
(73) Patentinhaber: ALSTOM Technology Ltd, 5400 Baden (CH)
(72) Erfinder: MOTZKUS, Thorsten, CH-5413 Birmenstorf (CH); BENZ, Urs, CH-5073 Gipf-Oberfrick (CH)
(74) Vertreter: Alstom Technology Ltd
(86) Internationale Anmeldenummer: PCT/EP2009/057765
(87) Internationale Veröffentlichungsnummer: WO 2010/000637

(56) Entgegenhaltungen:
- EP-A- 1 521 036
- DE-A1- 19 503 285
- DE-U1- 29 810 516
- FR-A- 2 031 924
- GB-A- 732 020
- GB-A- 2 303 888
- US-A- 3 595 588
- US-A- 3 869 222
- US-A- 5 076 591
- US-A1- 2005 057 003
- US-A1- 2005 095 123

## Beschreibung

### Technisches Gebiet

Die Erfindung betrifft eine Dichtung zum Eindämmen von Leckströmungen zwischen benachbarten Bauteilen von Strömungsmaschinen, insbesondere Gasturbinen, wobei die Dichtung ein längliches, in wenigstens eine Querrichtung elastisch verformbares, dünnwandiges Dichtungselement, das im Querschnitt die Form eines gebogenen Bandes hat, aufweist.

Im eingebauten Zustand ist die Dichtung in einem von Wänden der beiden Bauteile begrenzten Raum in die wenigstens eine Querrichtung vorgespannt angeordnet, derart, dass die wenigstens eine Querrichtung senkrecht zu zwei sich gegenüberliegenden Dichtflächen verläuft, von denen eine an einer Wand des einen Bauteils und die andere an einer Wand des anderen Bauteils ist.

### Stand der Technik

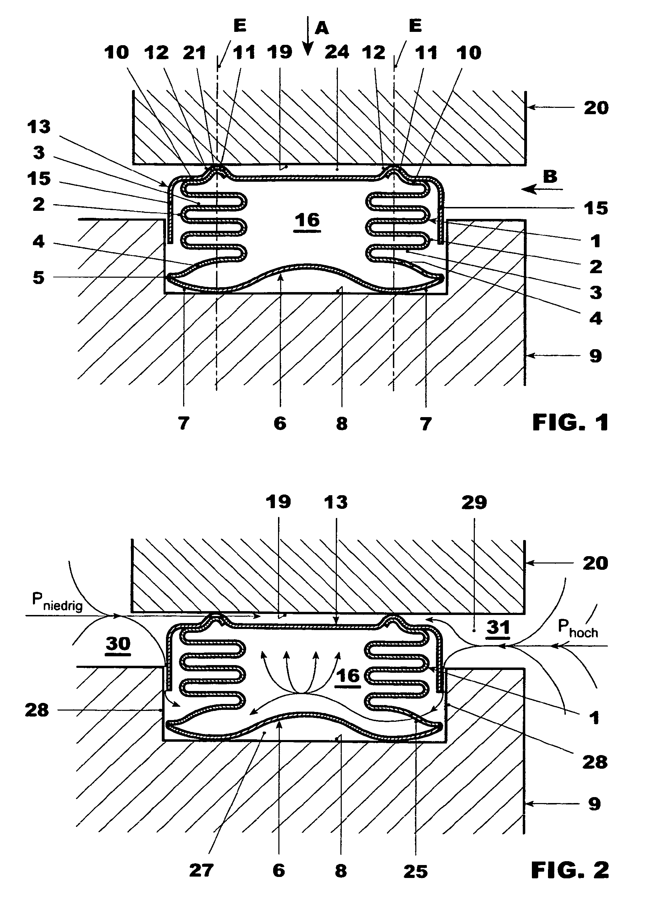

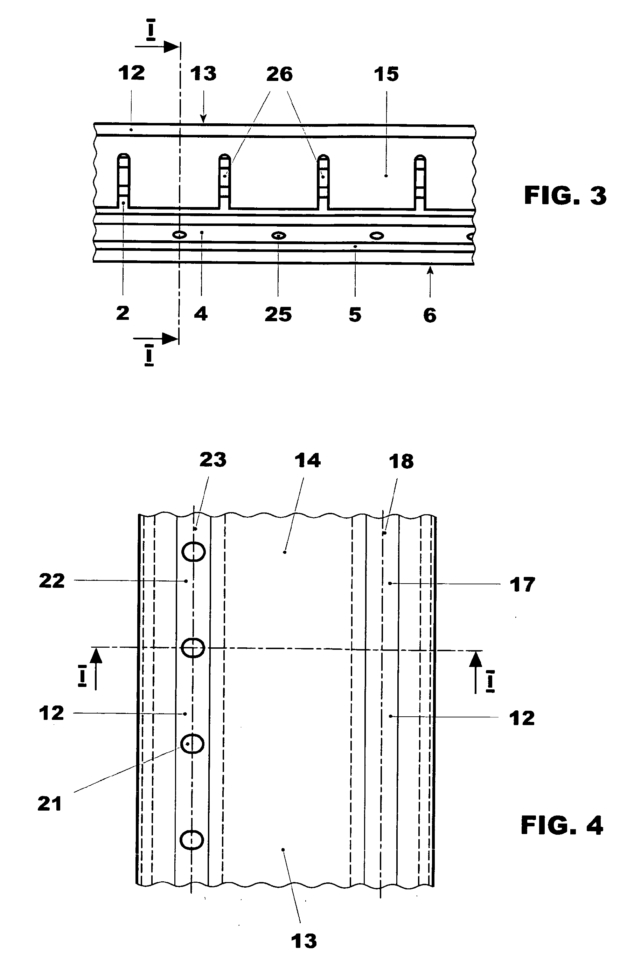

Eine solche Dichtung und Dichtungsanordnung sind aus der EP 1 378 690 A2 bekannt. Bei dieser Dichtung, die in einem von zwei parallelen Dichtflächen und einer senkrecht an einer der Dichtflächen sich anschließenden Stützwand begrenzten offenen Raum, der Teil eines beide Bauteile voneinander trennenden Spaltes ist, angeordnet ist, kann das Dichtungselement verschiedene Querschnittsformen haben, von denen eine einem "C" (Figur 3) entspricht, eine andere in einem mittleren Abschnitt einem "U" (Figur 1, 2) ähnelt, an dessen Schenkel sich zwei nach außen umgebogene runde Abschnitte anschließen, und eine weitere, einem "E" (Figur 4) ähnelt. Sowohl bei dem im Querschnitt C-förmigen Dichtungselement als auch bei dem im Querschnitt E-förmigen Dichtungselement befindet sich zwischen den jeweils freien Enden eine Öffnung, die einer Hochdruckseite des Spaltes zugewandt ist. Auch bei dem Dichtungselement mit einem im mittleren Teil U-förmigen Querschnitt ist eine Öffnung vorhanden, die der Hochdruckseite des Spaltes zugewandt ist. Diese Öffnung befindet sich zwischen den beiden nach außen umgebogenen runden Endabschnitten des Dichtungselementes. Allen vorgenannten Querschnittsformen des Dichtungselementes der bekannten Dichtung ist gemeinsam, dass sie jeweils zwei an den Dichtflächen der Bauteile anliegende Kontaktbereiche in der Nähe der freien Enden des Dichtungselements und ferner einen an der Stützwand anliegenden Stützbereich haben, wobei der Stützbereich der Niederdruckseite des Spaltes ausgesetzt ist.

Weitere Varianten dieser Gattung von Dichtungselementen mit gleichen oder leicht abgewandelten Querschnittsformen sind beispielsweise in US 3 595 588, in US 3 869 222, in US 2005/0057003 A1 oder in US 2005/0095123 A1 beschrieben. Solche gattungsgemäßen Dichtungselemente sind in Gasturbinenanlagen weit verbreitet.

Das Dichtungselement dieser bekannten Dichtungen ist unter Vorspannung in dem Raum zwischen den beiden Bauteilen angeordnet, so dass sich bei einer beispielsweise thermisch bedingten Erweiterung des Spaltes senkrecht zu den gegenüberliegenden Dichtflächen das Dichtungselement dergestalt verformt, dass sich die jeweilige Öffnung erweitert, und die Kontaktbereiche des Dichtungselementes den sich voneinander wegbewegenden Dichtungsflächen der Bauteile folgen. Umgekehrt wird bei einer beispielsweise ebenfalls thermisch bedingten Verengung des Spaltes senkrecht zu den gegenüberliegenden Dichtflächen das Dichtungselement dergestalt verformt, dass sich die jeweilige Öffnung verengt und sich der Abstand zwischen den an den Dichtflächen anliegenden Kontaktbereichen verringert.

Da die Öffnung des Dichtungselementes der bekannten Dichtung der Hochdruckseite des Spaltes zugewandt ist und ein den Stützbereich enthaltender Oberflächenabschnitt des Dichtungselementes der Niederdruckseite des Spaltes ausgesetzt ist, resultieren aus der Druckdifferenz an dem Dichtungselement angreifende Kräfte, die einerseits die durch elastische Verformung des Dichtungselementes entstehenden, die Kontaktbereiche an die Dichtflächen der Bauelemente drückenden Federkräfte verstärken und andererseits den Stützbereich fest an die Stützwand drücken. An den Kontaktbereichen des Dichtungselementes wirken die aus der Druckdifferenz zwischen der Hochdruckseite und der Niederdruckseite des Spaltes resultierenden Kräfte in die gleiche Richtung wie die durch elastische Verformung des Dichtungselementes entstehenden Federkräfte. Infolgedessen werden die Kontaktbereiche des Dichtungselementes auch noch an die Dichtflächen der Bauteile gedrückt, wenn die Federkräfte infolge übermäßig großer Spalterweiterung oder auch Materialermüdung des Dichtungselementes infolge ständig wechselnder Verformung des Dichtungselementes nicht mehr wirken. Bedingt durch die jeweilige Querschnittsform des Dichtungselementes der bekannten Dichtung sind der elastischen Verformbarkeit des Dichtungselementes jedoch enge Grenzen gesetzt, so dass sie nur solche Spalte überbrücken kann, die sich gegenüber einer anfänglichen Spaltbreite nur wenig erweitern.

Während das im Querschnitt C-förmige, im mittleren Abschnitt U-förmige oder einem "E" ähnelnde Dichtungselement der bekannten Dichtung seine dichtende Wirkung bei einer nicht zu großen Veränderung der relativen Lage der Bauteile senkrecht zu deren Dichtflächen beibehält, kann es zur Aufhebung der dichtenden Wirkung des Dichtungselementes kommen, wenn die Bauteile ihre relative Lage parallel zu ihrer Dichtfläche verändern. Bei einer derartigen relativen Lageveränderung der Bauteile trägt nämlich der zwischen den Kontaktbereichen des Dichtungselementes und den Dichtflächen wirkende Reibungswiderstand dazu bei, dass je nach Bewegungsrichtung der Bauteile das Dichtungselement stärker gegen die Stützwand gedrückt wird, wodurch eine Verkantung des Dichtungselementes die Folge ist, oder von der Stützwand wegbewegt wird, wodurch eine Lageänderung des Dichtungselementes relativ zu den Bauteilen die Folge ist. Beide Konsequenzen - Verkantung und Lageänderung des Dichtungselementes - wirken sich nachteilig auf die Dichtleistung der bekannten Dichtung aus.

Um den Reibungswiderstand zwischen dem Dichtungselement und den Bauteilen zu verringern, so dass das Dichtungselement bei einer relativen Lageänderung der Bauteile parallel zu ihren Dichtflächen weniger stark zum Verkanten oder zu einer Lageänderung relativ zu den Bauteilen neigt, ist bei einer weiteren Ausführungsform (Figur 5) der bekannten Dichtung vorgesehen, an das im Querschnitt C-förmige Dichtungselement zwei Kontaktkörper anzuschweißen oder anzulöten, die ihrerseits die an den Dichtflächen der Bauteile anliegenden Kontaktbereiche tragen. Durch die Verwendung geeigneter Materialien für die Kontaktkörper und das im Querschnitt C-förmige Dichtungselement können die Dichtflächen der Bauteile an den Kontaktbereichen der Kontaktkörper entlanggleiten, wenn sich die Bauteile relativ zueinander parallel zu ihren Dichtflächen bewegen, ohne die Dichtleistung zu beeinträchtigen, während gleichzeitig das im Querschnitt C-förmige Dichtungselement weiterhin gute Federungseigenschaften hat.

Dennoch kann auch diese mehrteilige Ausführung der bekannten Dichtung keine größeren Spalte überbrücken als es die zuvor genannten einteiligen Ausführungsformen der bekannten Dichtung vermögen.

Eine Dichtung mit einem einteiligen Dichtungselement, dessen Querschnittsform sich aus einem U-förmigen mittleren Abschnitt und zwei sich an den U-förmigen mittleren Abschnitt anschließenden Endabschnitten zusammensetzt, die nach außen rund umgebogen sind, ist auch aus der EP 1 323 894 A2 bekannt. Diese bekannte Dichtung ist in einer im Querschnitt U-förmigen Nut angeordnet, die in einem von zwei aneinanderstoßenden Bauteilen einer Gasturbine angeordnet ist. Das Dichtungselement liegt mit einem Stützbereich, der sich auf der Außenseite des U-förmigen mittleren Abschnitts befindet, an einer Stützwand an, die eine von zwei sich gegenüberliegenden Wänden der U-förmigen Bauteilnut ist. Die Bauteile haben zwei sich gegenüberliegende Dichtflächen, von denen sich eine am Boden der U-förmigen Nut befindet. Das Dichtungselement ist unter Vorspannung in einem Raum zwischen den beiden Bauteilen so angeordnet, dass die umgebogenen runden Endabschnitte mit ihrer jeweiligen Außenseite an den sich gegenüberliegenden Dichtflächen der Bauteile anliegen. Die der Stützwand gegenüberliegende Wand der U-förmigen Bauteilnut hat einen beträchtlichen Abstand von den umgebogenen Endabschnitten des Dichtungselementes. Infolgedessen kann sich das Dichtungselement zwischen den beiden sich gegenüberliegenden Wänden der im Querschnitt U-förmigen Nut in einem Maß bewegen, das zu einem Verkanten des Dichtungselementes führen kann, wenn sich die Bauteile entsprechend bewegen. Auch diese Dichtung ist nicht geeignet, ihre Dichtleistung aufrechtzuerhalten, wenn sich zwischen den beiden Bauteilen ein größerer Spalt ausbildet, weil dann die Endabschnitte des Dichtungselementes nicht mehr oder nicht fest genug an den Dichtflächen der Bauteile anliegen.

Aus der US 4 854 600 A ist eine einer Druckdifferenz ausgesetzte Dichtung mit einem ringförmigen Dichtungselement bekannt, das im Querschnitt die Form eines mehrfach gebogenen Bandes hat, das mehrere aufeinanderfolgende Biegungen mit wechselnden Biegerichtungen hat, wobei jede Biegung die Querschnittsform eines zugehörigen gebogenen Wandabschnitts des Dichtungselementes ist. Bei einer Ausführungsform (Figuren 1, 8, 9, 10) hat das Dichtungselement im Querschnitt eine "S"-Form, wobei es zwei aufeinanderfolgende entgegengesetzt gebogene Wandabschnitte aufweist, die durch einen quer zur Bewegungsrichtung verlaufenden Wandabschnitt miteinander verbunden sind. An jeden der gebogenen Wandabschnitte schließt sich ein das jeweilige freie Ende aufweisender Endabschnitt an, der jeweils eine Biegung aufweist, dessen konvexe Außenseite an einer Dichtfläche des jeweiligen Bauteils anliegt. Die Dichtung ist in einem Ringraum zwischen zwei konzentrisch angeordneten Bauteilen unter Vorspannung angeordnet, wobei die beiden Dichtflächen der Bauteile entweder axial- oder radial-weisend ausgerichtet sind. Das Dichtungselement ist senkrecht zu den Dichtflächen elastisch verformbar, wobei es in dieser Richtung stärker elastisch verformbar ist als zum Beispiel ein im Querschnitt C-förmiges Dichtungselement, aber bei Bewegungen der Bauteile parallel zu ihren Dichtflächen, ebenso wie ein im Querschnitt C-förmiges Dichtungselement, dem Risiko ausgesetzt ist, seine Lage zu ändern.

Bei einer anderen Ausführungsform (Figuren 4, 5) besteht das Dichtungselement aus einem im Querschnitt S-förmigen Abschnitt und einem im Querschnitt geradlinigen Abschnitt, der mit einem Ende des S-förmigen Abschnitts durch Schweißen verbunden ist und dazu dient, den S-förmigen Abschnitt des ringförmigen Dichtungselementes an einer Drehung zu hindern. Der geradlinige Abschnitt ist der Querschnitt eines ebenen Ringes.

Bei einer weiteren Ausführungsform (Fig. 3) hat das Dichtungselement mehr als zwei aufeinanderfolgende gebogene Wandabschnitte und einen im Querschnitt geradlinigen Endabschnitt, der einen konvexen Oberflächenbereich hat, der an einer Dichtfläche des zugehörigen Bauteiles anliegt. Diese Ausführungsform hat eine hohe elastische Verformbarkeit senkrecht zu den parallelen Dichtflächen der Bauteile. Infolgedessen kann diese Ausführungsform bevorzugt dort eingesetzt werden, wo größere Bewegungen der Bauteile senkrecht zu ihren Dichtflächen zu erwarten sind. Hingegen wird diese Ausführungsform der bekannten Dichtung bei einer Bewegung der Bauteile parallel zu ihren Dichtflächen ebenfalls ungünstig belastet, so dass es infolge solcher Bewegungen zu einem unerwünschten Verkanten oder einer Lageänderung des Dichtungselementes mit nachteiligen Auswirkungen auf die Dichtleistung kommen kann.

Die FR 2 031 924 stellt ein ringförmiges Dichtungselement von hoher Elastizität vor, das insbesondere für hohe Druckunterschiede bei gleichzeitig stark ausgeprägten Temperaturwechseln geeignet sein soll. Es besteht aus zwei dünnwandigen gewölbten Bauteilen aus einem elastischen Metall, vorzugsweise Stahl, deren mittlere konvexe Oberflächenabschnitte aneinanderliegend fest verbunden sind, so dass sich ein X-förmiger Querschnitt ausbilden. Das Dichtungselement kann eine Umkleidung aus einem weichen Metall aufweisen, welche jeweils an den gegenüberliegenden Enden des Dichtungselements über die X-förmig gespreizten Schenkel übergestülpt ist, um die Gasdichtheit zu erhöhen. Im Betriebzustand ist das Dichtungselement komprimiert und drückt mit seinen Schenkeln federelastisch gegen die angrenzenden Oberflächenabschnitte der abzudichtenden Bauteile.

Die Druckschriften GB 732 020 und US 5 075 591 zeigen kompressible Dichtungspackungen zum Abdichten von gasgefüllten Druckräumen, welche hohen Temperaturen standzuhalten in der Lage sind und insbesondere für eine Anwendung in Verbrennungskraftmaschinen geeignet sein sollen. Ein Verband dünnwandiger, streifenförmiger Dichtungselemente liegt in einer Nut zwischen zwei abzudichtenden Bauteilen, wobei er die Nuttiefe um ein gewisses Maß überschreitet. Die streifenförmigen Dichtungselemente sind ein- oder mehrfach gebogen und stehen im Betriebszustand unter einer von den abzudichtenden Bauteilen aufgebrachten Vorspannung. Spaltdeformationen infolge Wärmedehnungen oder anderen Änderungen der Spaltbreite geben sie elastisch nach. Allerdings ist der wirksame Federbereich relativ beschränkt.

In der Druckschrift DE 298 10 516 U1 wird ein Dichtungselement vorgestellt, dass insbesondere große thermische Dehnungen auszugleichen vermag. Ein zusätzlicher Bewegungsspielraum im Dichtungsbereich wird dadurch geschaffen, dass an sich bekannte flexible Abdichtungselemente auf einem Dichtungsträger befestigt sind, welcher seinerseits parallel zur Bewegungsrichtung der gegeneinander abzudichtenden Bauteile nachgiebig gelagert ist. Der Dichtungsträger selbst wiederum stützt sich auf einem kompensatorähnlichen, in Richtung der Einwirkung der Dichtkraft reversibel verformbaren Hohlkörper ab. Ein dergestalt ausgebildetes Dichtungselement besitzt demgemäß einen Federweg, der sich aus den Federwegen der flexiblen Abdichtungselemente plus dem Federweg des Kompensators zusammensetzt.

GB 2 303 888 hat eine Streifendichtung für Brennkammern von Gasturbinentriebwerken zum Gegenstand. Jedes der abzudichtenden Bauteile ist gegenüberliegend mit einer Aufnahmenut für ein flexibles streifenförmiges Dichtungselement aus einem metallischen Werkstoff ausgerüstet. Zur Vermeidung von Leckageströmungen durch die Aufnahmenuten weist der Dichtungsstreifen an seinen beiden gegenüberliegenden Enden U-förmig ausgebildete Abdeckelemente auf. Diese Abdeckelemente sind in Form und Dimension komplementär zu den Aufnahmenuten ausgebildet und weisen selbst eine gewisse Elastizität auf, um sich selbsttätig an die Wandungen der Aufnahmenuten anzulegen. Auf diese Weise kann das Dichtungselement praktisch kraftschlüssig in der Aufnahmenut fixiert werden. Relativbewegungen der abzudichtenden Bauteile und dadurch bedingten Lageänderungen der Aufnahmenuten vermag das flexible Dichtungselement zu folgen, ohne dass die Dichtwirkung durch Leckagen beeinträchtigt wird.

Aus der US 5 630 593 A ist eine ringförmige Dichtung bekannt, bei der das elastisch verformbare Dichtungselement ein- oder mehrlagig sein kann und im Querschnitt entweder U-förmig mit nach außen umgebogenen Endabschnitten (Figuren 2, 3, 4) oder E-förmig (Figuren 6, 10) mit drei aufeinanderfolgenden gebogenen Wandabschnitten und zwei Endabschnitten, die nach außen umgebogen sind, ist. Das Dichtungselement kann einem Differenzdruck ausgesetzt sein, derart, dass die nach außen umgebogenen Endabschnitte stärker an die sich gegenüberliegenden Dichtflächen der Bauteile gedrückt werden. Die mehrlagige Ausführung hat eine höhere Festigkeit als die einlagige Ausführung. In einer der Materiallagen des Dichtungselementes können in Umfangsrichtung beabstandete Schlitze vorgesehen sein, um die Flexibilität des Dichtungselementes zu erhöhen. Diese Dichtung eignet sich zur Überbrückung von relativ geringfügig in ihrer Breite variierenden Spalten zwischen zwei Bauteilen. Die Dichtleistung dieser bekannten Dichtung ist aber auch gefährdet, wenn sich die Bauteile parallel zu ihren Dichtflächen bewegen.

Aus der EP 1 521 036 A1 sind ferner sogenannte Doppel-E-Dichtungen bekannt, die sich aus zwei im Querschnitt E-förmigen Dichtungselementen zusammensetzen, die durch eine im Querschnitt bandförmige Deckleiste durch Schweißen oder Löten miteinander verbunden sind. Dieser Dichtungstyp kann ebenso wie das einzelne im Querschnitt E-förmige Dichtungselement größere Spalte überbrücken als das im Querschnitt C-förmige Dichtungselement. Zwar ist die Doppel-E-Dichtung weniger als die Einfach-E-Dichtung dafür anfällig, sich bei parallel zu den Dichtflächen gerichteten Relativbewegungen der Bauteile zu verkanten oder zu verlagern; größere Relativbewegungen der Bauteile parallel zu ihren Dichtflächen beeinträchtigen aber auch die Lagestabilität und Verschleißfestigkeit der Doppel-E-Dichtung, so dass es bei größeren Relativbewegungen der Bauteile parallel zu ihren Dichtflächen zum Versagen der Doppel-E-Dichtung kommen kann. Wenn die Doppel-E-Dichtung zum Beispiel dort eingesetzt wird, wo das Kühlluftplenum gegenüber dem Verbrennungsplenum von Gasturbinenbrennkammern abzudichten ist, kann es infolge größerer Relativbewegungen der gegeneinander abzudichtenden Bauteile parallel zu ihren Dichtflächen zu Leckagen in den Verbrennungsraum der Brennkammer kommen, wodurch Leistungs- und Effizienzverluste sowie Emissionen und im schwerwiegendsten Fall Verbrennungsinstabilitäten die Folge sein können. Aufgrund des Dichtungsverlustes ist dann häufig eine vorzeitige Nachjustierung der Betriebsparameter der Gasturbine notwendig.

### Darstellung der Erfindung

Die Aufgabe der Erfindung besteht darin, die gattungsgemäße Dichtung so weiterzubilden, dass sie sich durch eine hohe elastische Verformbarkeit in einer quer zu den Dichtflächen der Bauteile weisenden Richtung und einen hohen Widerstand gegen Verformungen und Lageänderungen bei Relativbewegungen der Bauteile parallel zu ihren Dichtflächen auszeichnet und bei einer hohen Verschleißfestigkeit eine möglichst lang andauernde zufriedenstellende Dichtleistung garantiert.

Die Aufgabe der Erfindung wird hinsichtlich der Dichtung mit den Merkmalen des unabhängigen Patentanspruches 1 gelöst.

Bei einer solchen Dichtung ist die Integrität der Dichtung auch bei relativ großen Relativbewegungen der Bauteile gewährleistet. Gleichzeitig hat die erfindungsgemäße Dichtung eine hohe Verschleißfestigkeit und garantiert somit eine gleichbleibend gute Dichtleistung über einen längeren Zeitraum. Aufgrund dieser Eigenschaften kann die erfindungsgemäße Dichtung auch an solchen Orten einer Gasturbine eingesetzt werden, an denen bisher C-Dichtungen eingesetzt wurden, die zwar auch ein gutes Verschleißverhalten haben, aber nur eine geringe elastische Nachgiebigkeit aufweise.

### Kurze Erläuterung der Zeichnungen

Weitere Einzelheiten und Ausführungsarten der Erfindung sind in den beiliegenden Zeichnungen dargestellt und werden im Folgenden näher beschrieben. Es zeigen
- Fig. 1: einen Schnitt durch eine Dichtung und eine Dichtungsanordnung gemäß einem Ausführungsbeispiel der Erfindung, wobei der Schnitt entlang der Linie I-I in Fig. 3 oder Fig. 4 geführt ist,
- Fig. 2: die gleiche Schnittdarstellung wie in Fig. 1, wobei jedoch die Druckausbreitung in der Dichtungsanordnung von der Hochdruckseite P_{hoch} der Dichtung und der Niederdruckseite von P_{niedrig} der Dichtung durch Pfeile schematisch dargestellt ist,
- Fig. 3: eine Seitenansicht eines Abschnitts der Dichtung in Richtung des Pfeils B in Fig. 1, wobei die Bauteile der besseren Darstellung wegen weggelassen sind, und
- Fig. 4: eine Draufsicht auf einen Abschnitt der Dichtung in Richtung des Pfeils A in Fig. 1, wobei die Bauteile der besseren Darstellung wegen weggelassen sind.

### Wege zur Ausführung der Erfindung

Eine Dichtung, wie sie in den Figuren 1 bis 4 dargestellt ist, weist ein elastisch verformbares, dünnwandiges, im Querschnitt die Form eines gebogenen Bandes aufweisendes Dichtungselement 1 aus Metall auf, das zwei benachbarte Reihen von aufeinanderfolgenden gebogenen Wandabschnitten 2 hat, die jeweils durch einen quer verlaufenden Wandabschnitt 3 miteinander verbunden sind. Im dargestellten Ausführungsbeispiel sind in jeder Reihe sechs gebogene Wandabschnitte 2 vorhanden, die durch insgesamt fünf quer verlaufende Wandabschnitte 3 miteinander verbunden sind. Diese Anzahl von gebogenen Wandabschnitten 2 in jeder Reihe und die zugehörige Anzahl von quer verlaufenden Wandabschnitten 3 sind nur beispielhaft; sie könnten auch größer oder kleiner sein, da sie das gewünschte Ausmaß der elastischen Verformbarkeit des Dichtungselementes 1 mitbestimmen.

Wie aus Figur 1 ersichtlich, sind beide Reihen von aufeinanderfolgenden Wandabschnitten 2 und die sie verbindenden quer verlaufenden Wandabschnitte 3 so angeordnet, dass in jeder Reihe sämtliche quer verlaufende Wandabschnitte 3 jeweils eine gemeinsame Mittelebene E schneiden und die beiden Mittelebenen E,E parallel zueinander sind. Von dem in Figur 1 untersten gebogenen Wandabschnitt 2 jeder Reihe, der wenn die aufeinanderfolgenden Wandabschnitte 2 von unten nach oben gezählt werden, auch als "erster" gebogener Wandabschnitt 2 bezeichnet werden kann, erstreckt sich jeweils ein Wandabschnitt 4, der an seinem von dem gebogenen Wandabschnitt 2 entfernten Ende durch eine Schweißnaht 5 mit jeweils einem Ende einer im Querschnitt bandförmigen, ebenfalls dünnwandigen Deckleiste 6 aus Metall fest verbunden ist. Anstatt die Wandabschnitte 4 des Dichtungselementes 1 durch Schweißen mit der Deckleiste 6 zu verbinden, können sie mit der Deckleiste 6 auch durch Hartlöten fest verbunden werden.

Wie aus den Figuren 1 und 2 ersichtlich, ist die Deckleiste 6 so wellenförmig gebogen, dass sich zwei im seitlichen Abstand voneinander befindliche konvexe Oberflächenbereiche 7 ergeben, die jeweils partiell, vorzugsweise linienförmig, an einer Dichtfläche 8 eines Bauteils 9 dicht anliegen. Die in den Zeichnungen dargestellte Querschnittsform der Deckleiste 6 ist nur beispielhaft; bei anderen Ausführungsbeispielen kann die Deckleiste 6 im Querschnitt auch im Wesentlichen gerade sein und in diesem Fall können dann die an der Dichtfläche 8 anliegenden konvexen Oberflächenbereiche 7 der Deckleiste 6 durch Sicken gebildet sein.

Von dem in Fig. 1 obersten gebogenen Wandabschnitt 2 jeder Reihe, der, wenn die aufeinanderfolgenden Wandabschnitte 2 von unten nach oben gezählt wird, auch als "letzter" gebogener Wandabschnitt 2 bezeichnet werden kann, erstreckt sich ein im Querschnitt bandförmiger Endabschnitt 10, der in der Nähe seines freien Endes einen konvexen Oberflächenbereich 11 aufweist, der dicht an der konkaven Innenseite einer jeweiligen Sicke 12 anliegt, die Teil eines im Querschnitt U-förmigen, dünnwandigen Abdeckelementes 13 aus Metall ist. Das Abdeckelement 13 hat zwei parallele, von einer Basis 14 ausgehende, in Fig. 1 nach unten weisende Schenkel 15, die zusammen mit der Basis 14 einen nach unten offenen Raum 16 begrenzen, in dem das Dichtungselement 1, wie in den Figuren 1 und 2 ersichtlich, teilweise aufgenommen ist. Das Dichtungselement 1 und das Abdeckelement 13 sind durch Schweißen oder Hartlöten fest miteinander verbunden.

Die konvexe Außenseite der in den Figuren 1 und 2 rechten Sicke 12, ist ein streifenförmiger erhabener Oberflächenabschnitt 17 auf der von dem Raum 16 abgewandten Außenseite der Basis 14 des Abdeckelementes 13. Dieser erhabene Oberflächenabschnitt liegt entlang einer senkrecht zu der Zeichnungsebene verlaufenden, ununterbrochenen Dichtungslinie 18 dicht an der Dichtfläche 19 eines weiteren Bauteils 20 an. Die Dichtungslinie 18 ist in Fig. 4 als gestrichelte Linie dargestellt.

Die konkave Außenseite der in den Figuren 1 und 2 linken Sicke 12 des Abdeckelementes 13 liegt in einem streifenförmigen Bereich auf der Außenseite der Basis 14, der einen seitlichen Abstand von der in den Figuren 1 und 2 rechten Sicke 12 hat. Die linke Sicke 12 hat mehrere in Längsrichtung beabstandete Öffnungen 21, zwischen denen erhabene Oberfiächenabschnitte 22 liegen, die entlang einer in Fig. 4 gestrichelt gezeichneten, durch die Öffnung 21 unterbrochenen Dichtungslinie 23 an der Dichtfläche 19 des Bauteils 20 dicht anliegen. Die Öffnungen 21 sind auf der dem Raum 16 zugewandten Innenseite der Basis 14 des Abdecklementes 13 durch den konvexen Oberflächenbereich 11 der Basis 14 überdeckt und damit zu dem Raum 16 hin dicht verschlossen. Jede Öffnung 21 schafft einen von der Dichtfläche 19, dem Abdeckelement 13 und dem konvexen Oberflächenbereich 11 des Dichtungselementes 1 begrenzten Strömungskanal, der einen zwischen den Dichtungslinien 18 und 23, der Dichtfläche 19 und der Außenseite der Basis 14 des Abdeckelementes eingeschlossenen Raum 24 mit der in den Figuren 1, 2 und 4 links von der Dichtungslinie 23 liegenden äußeren Umgebung der Dichtung verbindet.

In dem in Fig. 1 rechten Wandabschnitt 4 sind in Abständen voneinander mehrere Öffnungen 25 vorgesehen. Die Öffnungen 25 verbinden den im Inneren der Dichtung liegenden Raum 16 mit der in den Figuren 1, 2 und 4 rechts von der Dichtungslinie 18 liegenden äußeren Umgebung der Dichtung.

Wie aus Fig. 3 ersichtlich, befinden sich mehrere Schlitze 26 in den Schenkeln 15 des Abdeckelementes 13. Die Schlitze 26 erstrecken sich von dem freien Ende der Schenkel 15 in Richtung zu der Basis 14 des Abdeckelementes 13. Die Schlitze 26 ermöglichen es, dass das Abdeckelement 13 auch in der Zeichnungsebene der Fig. 3 elastisch biegeverformbar ist.

Bei ihrem bestimmungsgemäßen Gebrauch ist die Dichtung Teil einer Dichtungsanordnung, zu der die beiden Bauteile 9 und 20 gehören, deren parallele Dichtflächen 8 bzw. 19 einander gegenüberliegen. Im Bauteil 9 befindet sich eine im Querschnitt U-förmige Nut 27, die von zwei sich gegenüberliegenden Wänden 28 des Bauteils 9 und dessen Dichtfläche 8 gebildet wird.

Wie aus den Figuren 1 und 2 ersichtlich, ist die Dichtung in dem von den sich gegenüberliegenden Wänden 28 und den sich gegenüberliegenden Dichtflächen 8 und 19 der Bauteile 9 bzw. 20 begrenzten Raum angeordnet, der Teil eines zwischen den Bauteilen 9 und 20 sich erstreckenden, in seiner Breite variablen Spalts 29 ist, der im dargestellten Ausführungsbeispiel zwei voneinander beabstandete Ausgänge 30 und 31 hat, zwischen denen die Dichtung angeordnet ist. Über den Ausgang 30 steht der Spalt 29 mit einem ein gasförmiges Medium niederen Druckes P_{niedrig} enthaltenden Bereich in Verbindung, und über den Ausgang 31 steht der Spalt 29 mit einem ein gasförmiges Medium höheren Druckes P_{hoch} enthaltenden Bereich in Verbindung. Die Aufgabe der Dichtung besteht darin, die beiden Bauteile 9 und 20 dadurch gegeneinander abzudichten, dass sie eine Leckströmung vom Hochdruckbereich durch den Spalt 29 zu dem niederen Bereich verhindert.

In einer Gasturbine sind die aus Metall bestehenden Bauteile 9 und 20 unterschiedlichen thermischen Belastungen ausgesetzt, so zum Beispiel, wenn sie Teile einer Brennkammer sind und einerseits verdichteter Kühlluft für die Brennkammer und andererseits heißen Verbrennungsgasen aus der Brennkammer ausgesetzt sind. Infolge thermischer Belastung der Bauteile 9 und 20 kommt es zu Verformungen, die sich in Relativbewegungen der Bauteile 9, 20 senkrecht zu ihren Dichtflächen 8 bzw. 19, aber auch in Relativbewegungen parallel zu ihren Dichtflächen 8 bzw. 19 äußern. Durch Relativbewegungen der Bauteile senkrecht zu ihren Dichtflächen verändert sich die Breite des Spaltes 29 entsprechend. Aufgrund der Geometrie und den elastischen Materialeigenschaften des Dichtungselementes 1 ist das Dichtungselement 1 hauptsächlich in Querrichtung, das heißt, parallel zu den Mittelebenen E,E elastisch verformbar.

Im dargestellten Ausführungsbeispiel ist das Dichtungselement 1 in einem teilkomprimierten Zustand gezeigt, der zugleich den Einbauzustand der Dichtung vor oder nach einem Betriebszyklus der Gasturbine darstellt. In diesem Zustand ragen die Schenkel 15 des Abdeckelementes 13 in die U-förmige Nut 27 hinein, wobei sie ein geringes seitliches Spiel zu den ihnen benachbarten, sich gegenüberliegenden Wänden 28 des Bauteils 9 haben. Die Schenkel 15 des Abdeckelementes 13 können sich daher parallel zu den Wänden 28 und geringfügig senkrecht zu diesen Wänden bewegen, wobei sich beide Bewegungsrichtungen auch überlagern können.

Bei einer Spalterweiterung entspannt sich die Dichtung zunehmend, wobei sich das Abdeckelement 13 von der Deckleiste 6 weiter entfernt. Umgekehrt wird bei einer Spaltverengung das Dichtungselement 1 stärker zusammengedrückt, wobei sich das Abdeckelement 13 der Deckleiste 6 nähert. In beiden Fällen liegen die konvexen Oberflächenbereiche 7 der Deckleiste 6 und die erhabenen Oberflächenabschnitte 17 und 22 des Abdeckelementes 13 an der jeweiligen Dichtfläche 8 bzw. 19 an.

Während des Betriebs der Gasturbine strömt durch die Öffnungen 25 Gas von der Hochdruckseite der Dichtung in den Raum 16 ein. Durch die mittels der Öffnung 21 gebildeten Strömungskanäle strömt Gas von der Niederdruckseite der Dichtung in den Raum 24 ein. Die sich aus der Druckdifferenz zwischen dem Raum 24 und dem Raum 16 resultierenden Kräfte wirken auf das Abdeckelement 13 in der gleichen Richtung wie die durch die Kompression des Dichtungselementes 1 entstehenden Federkräfte. Dies hat zur Folge, dass, wenn der Spalt 29 sich so stark erweitert, dass die elastische Kompression des Dichtungselementes 1 vollständig aufgehoben ist, die aus der Druckdifferenz zwischen dem Raum 16 und dem Raum 24 resultierenden Kräfte das Abdeckelement entlang der Dichtungslinien 18 und 23 weiterhin dicht an die Dichtfläche 19 des Bauteils 20 drücken.

Die innerhalb und außerhalb der Dichtung sich im Betrieb der Gasturbine einstellende Druckverteilung ist durch Pfeile in Fig. 2 schematisch dargestellt.

Bei einer derartigen Druckverteilung herrscht auf der Unterseite der Deckleiste 6 links von der Stelle, an der der rechte Oberflächenbereich 7 an der Dichtfläche 8 in den Figuren 1 und 2 anliegt, ein niedrigerer Druck als in dem Raum 16. Die aus dieser Druckdifferenz resultierenden Kräfte wirken auf die Deckleiste 6 in der Weise, dass die Oberflächenbereiche 7 an die Dichtfläche 8 gedrückt werden, auch wenn die aus der Kompression des Dichtungselementes 1 resultierenden Federkräfte aufgehoben sind.

Eine so große Spalterweiterung, die zur Aufhebung der elastischen Kompression des Dichtungselementes führt, ist kein Regelfall während des normalen Betriebs der Gasturbine. Sie kann in extremen Ausnahmesituationen auftreten. Da die Dichtung auch in diesen Situationen weiterhin zuverlässig die Bauteile 9 und 20 gegeneinander abdichtet, weil sie, wie oben beschrieben, ihre Dichtleistung nicht nur auf das Vorhandensein von Federkräften stützt, sondern sich auch die zwischen der Hochdruckseite und der Niederdruckseite der Dichtung herrschende Druckdifferenz zunutze macht, weist die Dichtung gewisse Notlaufeigenschaften auf.

Die Abmessungen der Dichtung und der U-förmigen Nut 27 sind so getroffen, dass einerseits die Schenkel 15 des Abdeckelementes 13 auch dann nicht die U-förmige Nut 27 verlassen, wenn infolge einer sehr großen Spalterweiterung die elastische Kompression des Dichtungselementes aufgehoben wird und die Dichtung ihre Dichtleistung ausschließlich aus der Druckdifferenz zwischen der Hochdruckseite und der Niederdruckseite der Dichtung bezieht. Andererseits können die Schenkel 15 des Abdeckelementes 13 nicht so tief in die U-förmige Nut 27 eintauchen, dass bei der extremsten Spaltverengung die Bauteile 9 und 20 durch die Dichtung daran gehindert würden, aneinanderzustoßen. Die seitliche Überdeckung der Schenkel 15 des Abdeckelementes 13 durch die Wände 28 über den gesamten Bereich maximal möglicher Spaltbreiten dient dazu sicherzustellen, dass sich das Abdeckelement 13 über seine Schenkel 15 seitlich an den Wänden 28 des Bauteils 9 abstützen kann, wenn sich die Bauteile 9 und 20 bei einer beliebigen Spaltbreite innerhalb des maximal möglichen Bereiches parallel zu ihren Dichtflächen bewegen. Bewegt sich zum Beispiel das Bauteil 20 relativ zu dem Bauteil 9 in den Figuren 1 und 2 nach rechts, wird das Abdeckelement 13 von dem Bauteil 20 soweit mitgenommen, bis der rechte Schenkel 15 an der rechten Wand 28 des Bauteils 9 anliegt. Setzt das Bauteil 20 danach seine Bewegung in dieser Richtung fort, gleitet die Dichtfläche 19 an den erhabenen Oberflächenabschnitten 17 und 22 entlang, während diese mit der Dichtfläche 19 längs der Dichtungslinien 18 und 23 weiterhin in Dichtungskontakt bleiben. Die bei diesem Vorgang auf die Dichtung wirkenden seitlichen Kräfte werden weitgehend ausschließlich von dem Abdeckelement 13 aufgenommen und über den mit der entsprechenden Wand 28 in Anlage befindlichen Schenkel 15 in das Bauteil 9 abgeleitet. Eine eventuell dabei auftretende seitliche Verformung des Dichtungselementes 1 ist minimal.

Die elastische Verformbarkeit des Dichtungselementes in der senkrecht zu den Dichtflächen weisenden Hauptrichtung wird nicht merklich durch die Anlage des einen Schenkels 15 an der entsprechenden Wand 28 beeinträchtigt. Ein die Dichtleistung der Dichtung beeinträchtigendes Verlagern oder Verkanten der Dichtung ist ausgeschlossen. Dies gilt gleichermaßen, wenn sich das Bauteil 20 in die Gegenrichtung bewegt, oder wenn das Bauteil 9 sich relativ zu dem Bauteil 20 parallel zu den Dichtflächen 19 bewegt. Eine stabile Lage der Dichtung ist gewährleistet und ein Verkanten sicher ausgeschlossen.

Für die beschriebene Funktion der Dichtung ist von Bedeutung, dass im entspannten Zustand des Dichtungselementes 1 ein Teil des Dichtungselementes 1 außerhalb des von den Schenkeln 15 und der Basis 14 des Abdeckelementes 13 begrenzten Raumes 16 ist.

Das Abdeckelement 13 und das Dichtungselement 1 können aus dem gleichen Metall oder aus verschiedenen Metallen sein. Die Verwendung verschiedener Metalle ermöglicht es, die Wahl so zu treffen, dass das Abdeckelement 1 seiner Stütz- und Gleitfunktion und das Dichtungselement seiner elastischen Verformbarkeit bestmöglich gerecht wird. Auch das Material der Deckleiste kann im Hinblick auf ihre Funktion, stets dichtend an der Dichtfläche 8 anzuliegen, gewählt werden. Da nur das Abdeckelement 13 und die Deckleiste 6 Kontakt mit den abzudichtenden metallischen Bauteilen 9, 20 haben, werden für das Abdeckelement und die Deckleiste besonders verschleißfeste Materialien ausgewählt. Im Ausführungsbeispiel ist die Dichtung heißen Verbrennungsgasen ausgesetzt. Infolgedessen sind sämtliche Materialien der Dichtung hochtemperaturbeständig.

Die Dichtung kann aus einem oder mehreren geraden Stücken, wie zu einem längeren Stück zusammengefügt werden, oder aus einem geschlossenen Ring oder aus Ringsegmenten, die zu einem geschlossenen Ring zusammengesetzt werden, bestehen. Ist die Dichtung ringförmig, tragen besonders die Schlitze 26 dazu bei, dem Abdeckelement 13 der Dichtung einen bogenförmigen Verlauf geben zu können.

Während die Erfindung hauptsächlich anhand des in den Figuren 1 bis 4 dargestellten Ausführungsbeispiels beschrieben wurde, sind Abwandlungen möglich, ohne den Erfindungsgedanken zu verlassen. Beispielsweise kann anstelle eines zwei Reihen von gebogenen Wandabschnitten aufweisenden Dichtungselementes auch ein Dichtungselement mit nur einer Reihe von gebogenen Wandabschnitten verwendet werden. Ein solches Dichtungselement kann dann die Form einer E-Dichtung haben.

### Bezugszeichenliste

- 1: Dichtungselement
- 2: gebogene Wandabschnitte
- 3: quer verlaufende Wandabschnitte
- 4: Wandabschnitt
- 5: Schweißnaht
- 6: Deckleiste
- 7: konvexer Oberflächenbereich
- 8: Dichtfläche
- 9: Bauteil
- 10: Endabschnitt
- 11: konvexer Oberflächenbereich
- 12: Sicke
- 13: Abdeckelement
- 14: Basis
- 15: Schenkel
- 16: Raum
- 17: erhabener Oberflächenabschnitt
- 18: Dichtungslinie
- 19: Dichtfläche
- 20: Bauteil
- 21: Öffnungen
- 22: erhabene Oberflächenabschnitte
- 23: Dichtungslinie
- 24: Raum
- 25: Öffnungen
- 26: Schlitze
- 27: U-förmige Nut
- 28: Wände
- 29: Spalt
- 30: Ausgang
- 31: Ausgang

## Patentansprüche

1. Dichtung zum Eindämmen von Leckströmungen zwischen benachbarten Bauteilen (9, 20) von Strömungsmaschinen, insbesondere Gasturbinen, mit einem in wenigstens eine Querrichtung elastisch verformbaren Dichtungselement (1), das im Querschnitt die Form eines gebogenen Bandes hat, ein im Querschnitt U-förmiges Abdeckelement (13) aufweist, das zwischen seinen Schenkeln (15) und seiner Basis (14) einen Raum (16) begrenzt, der das Dichtungselement (1) aufnimmt, wobei im entspannten Zustand des Dichtungselementes (1) ein Teil des Dichtungselementes (1) außerhalb des von den Schenkeln (15) und der Basis (14) des Abdeckelementes (13) begrenzten Raumes (16) ist und die Basis (14) des Abdeckelementes (13) auf ihrer von dem Raum (16) abgewandten Außenseite einen streifenförmigen erhabenen Oberflächenabschnitt (17) zur Anlage an einer Dichtfläche (19) von einem (20) der Bauteile (9, 20) hat, **dadurch gekennzeichnet, dass** die Basis (14) des Abdeckelementes (13) auf ihrer Außenseite einen im seitlichen Abstand von dem streifenförmigen erhabenen Oberflächenabschnitt (17) verlaufenden streifenförmigen Bereich hat, in dem sich mehrere voneinander beabstandete erhabene Oberflächenabschnitte (22) zur Anlage an der Dichtfläche (19) des einen Bauteils (20) befinden, wobei sich zwischen mindestens zwei benachbarten erhabenen Oberflächenabschnitten (22) des streifenförmigen Bereichs ein zumindest von der Dichtfläche (19) des einen Bauteils (20) und dem Abdeckelement (13) begrenzter Strömungskanal für Niederdruckfluid befindet.

2. Dichtung nach Anspruch 1, **dadurch gekennzeichnet, dass** das Dichtungselement (1) im Querschnitt die Form eines mehrfach gebogenen Bandes hat, das mehrere aufeinanderfolgende Biegungen mit wechselnden Biegerichtungen hat, wobei jede Biegung die Querschnittsform eines zugehörigen gebogenen Wandabschnitts (2) des Dichtungselementes (1) ist.

3. Dichtung nach Anspruch 2, **dadurch gekennzeichnet, dass** jeweils zwei aufeinanderfolgende gebogene Wandabschnitte (2) des Dichtungselementes (1) durch einen quer verlaufenden Wandabschnitt (3) verbunden sind, und sämtliche quer verlaufende Wandabschnitte (3) eine gemeinsame Mittelebene (E) schneiden.

4. Dichtung nach Anspruch 2, **dadurch gekennzeichnet, dass** das Dichtungselement (1) zwei benachbarte Reihen von aufeinanderfolgenden gebogenen Wandabschnitten (2) hat, jeweils zwei aufeinanderfolgende gebogene Wandabschnitte (2) jeder Reihe durch einen quer verlaufenden Wandabschnitt (3) verbunden sind und in jeder Reihe sämtliche quer verlaufende Wandabschnitte (3) jeweils eine gemeinsame Mittelebene (E) schneiden, und beide Mittelebenen (E, E) parallel zueinander sind.

5. Dichtung nach Anspruch 4, **dadurch gekennzeichnet, dass** beide Reihen von gebogenen Wandabschnitten (2) durch eine im Querschnitt bandförmige Deckleiste (6) verbunden sind, die sich zwischen zwei Wandabschnitten (4) erstreckt, von denen jeder mit einem ersten gebogenen Wandabschnitt (2) einer jeden Reihe verbunden ist, und die Deckleiste (6) wenigstens einen von dem Raum (16) abgekehrten konvexen Oberflächenbereich (7) zur mindestens partiellen Anlage an einer Dichtfläche(8) des anderen Bauteils (9) hat.

6. Dichtung nach Anspruch 5, **dadurch gekennzeichnet, dass** jede Reihe von gebogenen Wandabschnitten (2) einen jeweils letzten gebogenen Wandabschnitt (2) hat, an den sich ein ein freies Ende aufweisender, im Querschnitt bandförmiger Endabschnitt (10) anschließt, der mindestens partiell an der dem Raum (16) zugekehrten Innenseite der Basis (14) des Abdeckelementes (13) dicht anliegt.

7. Dichtung nach Anspruch 6, **dadurch gekennzeichnet, dass** in einem die Deckleiste (6) mit dem ersten gebogenen Wandabschnitt (2) einer Reihe von gebogenen Wandabschnitten (2) verbindenden Wandabschnitt (4) wenigstens eine Öffnung (25) für den Durchtritt von Hochdruckfluid vorgesehen ist.

8. Dichtung nach einem der vorhergehenden Ansprüche, **dadurch gekennzeichnet, dass** das Dichtungselement (1) oder das Abdeckelement (13), oder das Dichtungselement (1) und das Abdeckelement (13) aus Metall besteht bzw. bestehen.

9. Dichtung nach einem der Ansprüche 1 bis 7, **dadurch gekennzeichnet, dass** das Dichtungselement (1) und das Abdeckelement (13) aus verschiedenen Metallen bestehen.

10. Dichtung nach einem der Ansprüche 8 oder 9, **dadurch gekennzeichnet, dass** das Metall oder die Metalle hochtemperaturbeständig ist bzw. sind.

11. Dichtung nach einem der vorhergehenden Ansprüche, **dadurch gekennzeichnet, dass** das Dichtungselement (1) und das Abdeckelement (13) durch Schweißen oder Löten fest und gasdicht miteinander verbunden sind.

12. Dichtung nach einem der vorhergehenden Ansprüche, **dadurch gekennzeichnet, dass** das Abdeckelement (13) in wenigstens einem der Schenkel (15) einen oder mehrere Schlitze (26) aufweist, der oder die vom freien Ende des oder der Schenkel (26) in Richtung zu der Basis (14) des Abdeckelementes (13) verläuft bzw. verlaufen.

## Claims

1. Seal for stemming leakage flows between adjacent components (9, 20) of turbomachines, especially gas turbines, with a sealing element (1) which is elastically deformable in at least one transverse direction and in cross section has the shape of a bent band, and a cover element (13) which is U-shaped in cross section and which between its legs (15) and its base (14) delimits a space (16) which accommodates the sealing element (1), wherein in the relaxed state of the sealing element (1) a part of the sealing element (1) is outside the space (16) which is delimited by the legs (15) and the base (14) of the cover element (13) and the base (14) of the cover element (13), on its outer side which faces away from the space (16), has a strip-like, raised surface section (17) for bearing against a sealing surface (19) of one (20) of the components (9, 20), **characterized in that** the base (14) of the cover element (13), on its outer side, has a strip-like region which extends at a lateral distance from the strip-like, raised surface section (17), in which region a plurality of spaced-apart, raised surface sections (22) are located for bearing against the sealing surface (19) of the one component (20), wherein a flow passage for low-pressure fluid, which is delimited at least by the sealing surface (19) of the one component (20) and the cover element (13), is located between at least two adjacent, raised surface sections (22) of the strip-like region.

2. Seal according to Claim 1, **characterized in that** the sealing element (1) in cross section has the shape of a repeatedly bent band which has a plurality of consecutive bends with alternating bend directions, wherein each bend is the cross-sectional shape of an associated bent wall section (2) of the sealing element (1).

3. Seal according to Claim 2, **characterized in that** two consecutive bent wall sections (2) of the sealing element (1) are connected in each case by means of a transversely extending wall section (3), and all the transversely extending wall sections (3) intersect a common center plane (E).

4. Seal according to Claim 2, **characterized in that** the sealing element (1) has two adjacent rows of consecutive bent wall sections (2), two consecutive bent wall sections (2) of each row are connected by means of a transversely extending wall section (3), and in each row all the transversely extending wall sections (3) intersect a common center plane (E) in each case, and both center planes (E, E) are parallel to each other.

5. Seal according to Claim 4, **characterized in that** both rows of bent wall sections (2) are connected by means of a cover strip (6) which is band-like in cross section and extends between two wall sections (4), of which each is connected to a first bent wall section (2) of each row, and the cover strip (6) has at least one convex surface region (7), which is turned away from the space (16), for at least partially bearing against a sealing surface (8) of the other component (9).

6. Seal according to Claim 5, **characterized in that** each row of bent wall sections (2) has a last bent wall section (2) in each case, adjoining which is an end section (10) which has a free end, is band-like in cross section, and at least partially bears tightly against the inner side, - which is turned towards the space (16), of the base (14) of the cover element (13).

7. Seal according to Claim 6, **characterized in that** in a wall section (4) which connects the cover strip (6) to the first bent wall section (2) of a row of bent wall sections (2), provision is made for at least one opening (25) for the passage of highpressure fluid.

8. Seal according to one of the preceding claims, **characterized in that** the sealing element (1) or the cover element (13), or the sealing element (1) and the cover element (13), consists, or consist, of metal.

9. Seal according to one of Claims 1 to 7, **characterized in that** the sealing element (1) and the cover element (13) consist of different metals.

10. Seal according to one of Claims 8 or 9, **characterized in that** the metal, or the metals, is, or are, resistant to high temperatures.

11. Seal according to one of the preceding claims, **characterized in that** the sealing element (1) and the cover element (13) are interconnected in a fixed and gastight manner by means of welding or soldering.

12. Seal according to one of the preceding claims, **characterized in that** the cover element (13) in at least one of the legs (15) has one or more slots (26) which extends, or extend, from the free end of the leg (15), or legs, in the direction towards the base (14) of the cover element (13).

## Revendications

1. Joint d'étanchéité pour contenir des écoulements de fuite entre des composants voisins (9, 20) de turbomachines, en particulier de turbines à gaz, avec un élément de joint d'étanchéité (1) élastiquement déformable dans au moins une direction transversale, qui a en section transversale la forme d'une bande repliée, et un élément de recouvrement (13) en forme de U en section transversale, qui limite entre ses branches (15) et sa base (14) un espace (16), qui contient l'élément de joint d'étanchéité (1), dans lequel, à l'état détendu de l'élément de joint d'étanchéité (1), une partie de l'élément de joint d'étanchéité (1) se trouve à l'extérieur de l'espace (16) limité par les branches (15) et la base (14) de l'élément de recouvrement (13) et la base (14) de l'élément de recouvrement (13) comporte, sur son côté extérieur situé à l'opposé de l'espace (16), une partie de surface surélevée en forme de bande (17) destinée à l'application sur une face d'étanchéité (19) d'un (20) des composants (9, 20), **caractérisé en ce que** la base (14) de l'élément de recouvrement (13) comporte sur son côté extérieur une zone en forme de bande s'étendant à une distance latérale de la partie de surface surélevée en forme de bande (17), dans laquelle il se trouve plusieurs parties de surface surélevées (22) espacées l'une de l'autre destinées à l'application sur la face d'étanchéité (19) dudit un composant (20), dans lequel il se trouve entre au moins deux parties de surface surélevées voisines (22) de la zone en forme de bande un canal d'écoulement pour du fluide basse pression limité au moins par la face d'étanchéité (19) dudit un composant (20) et l'élément de recouvrement (13).

2. Joint d'étanchéité selon la revendication 1, **caractérisé en ce que** l'élément de joint d'étanchéité (1) a en section transversale la forme d'une bande plusieurs fois repliée, qui comporte plusieurs courbures successives avec des directions de courbure alternées, dans lequel chaque courbure est la forme de section transversale d'une partie de paroi repliée correspondante (2) de l'élément de joint d'étanchéité (1).

3. Joint d'étanchéité selon la revendication 2, **caractérisé en ce que** deux parties de paroi repliées successives (2) de l'élément de joint d'étanchéité (1) sont respectivement reliées par une partie de paroi (3) s'étendant transversalement, et toutes les parties de paroi s'étendant transversalement (3) coupent un plan central commun (E).

4. Joint d'étanchéité selon la revendication 2, **caractérisé en ce que** l'élément de joint d'étanchéité (1) comporte deux rangées voisines de parties de paroi repliées successives (2), deux parties de paroi repliées successives (2) de chaque rangée sont respectivement reliées par une partie de paroi s'étendant transversalement (3) et dans chaque rangée toutes les parties de paroi s'étendant transversalement (3) coupent respectivement un plan central commun (E), et les deux plans centraux (E, E) sont parallèles l'un à l'autre.

5. Joint d'étanchéité selon la revendication 4, **caractérisé en ce que** les deux rangées de parties de paroi repliées (2) sont reliées par une baguette de couverture (6) en forme de bande en section transversale, qui s'étend entre deux parties de paroi (4), dont chacune est reliée à une première partie de paroi repliée de chaque rangée, et la baguette de couverture (6) comporte au moins une zone de surface convexe (7) à l'opposé de l'espace (16) pour l'application au moins partielle sur une face d'étanchéité (8) de l'autre composant (9).

6. Joint d'étanchèité selon la revendication 5, **caractérisé en ce que** chaque rangée de parties de paroi repliées (2) comporte respectivement une dernière partie de paroi repliée (2), à laquelle se raccorde une partie d'extrémité (10) en forme de bande en section transversale présentant une extrémité libre, qui s'applique de façon étanche au moins partiellement sur le côté intérieur, tourné vers l'espace (16), de la base (14) de l'élément de recouvrement (13).

7. Joint d'étanchéité selon la revendication 6, **caractérisé en ce qu'**il est prévu dans une partie de paroi (4) reliant la baguette de couverture (6) à la première partie de paroi repliée (2) d'une rangée de parties de paroi repliées (2) au moins une ouverture (25) pour le passage de fluide haute pression.

8. Joint d'étanchéité selon l'une quelconque des revendications précédentes, **caractérisé en ce que** l'élément de joint d'étanchéité (1) ou l'élément de recouvrement (13) ou l'élément de joint d'étanchéité (1) et l'élément de recouvrement (13) se compose(nt) de métal.

9. Joint d'étanchéité selon l'une quelconque des revendications 1 à 7, **caractérisé en ce que** l'élément de joint d'étanchéité (1) et l'élément de recouvrement (13) se composent de métaux différents.

10. Joint d'étanchéité selon l'une des revendications 8 ou 9, **caractérisé en ce que** le métal ou les métaux est/sont résistant(s) aux hautes températures.

11. Joint d'étanchéité selon l'une quelconque des revendications précédentes, **caractérisé en ce que** l'élément de joint d'étanchéité (1) et l'élément de recouvrement (13) sont assemblés l'un à l'autre, solidement et de façon étanche au gaz, par soudage ou par brasage.

12. Joint d'étanchéité selon l'une quelconque des revendications précédentes, **caractérisé en ce que** l'élément de recouvrement (13) présente dans au moins une des branches (15) une ou plusieurs fente (s) (26), qui s'étend(ent) de l'extrémité libre de la ou des branche(s) (15) en direction de la base (14) de l'élément de recouvrement (13).
